# EUROPEAN PATENT APPLICATION

(11) **EP 3 951 952 A1**
(43) Date of publication of application: **09.02.2022**
(21) Application number: 20781950.9
(22) Date of filing: 16.03.2020
(51) Int. Cl.: H01M 4/62, H01M 10/056, H01M 10/0562, H01B 1/06, H01B 1/10, H01B 13/00, C01B 17/22

(54) **SULFIDE SOLID ELECTROLYTE**

(30) Priority: 29.03.2019 JP 2019068997
(71) Applicant: Mitsui Mining & Smelting Co., Ltd., Shinagawa-ku Tokyo 141-8584 (JP)
(72) Inventor: MORINAKA, Taizo, Ageo-shi, Saitama 362-0021 (JP); UESUGI, Hideo, Ageo-shi, Saitama 362-0021 (JP)
(74) Representative: Novagraaf Technologies
(86) International application number: PCT/JP2020/011515
(87) International publication number: WO 2020/203231

(57) **Abstract**

A sulfide solid electrolyte contains elemental lithium (Li), elemental phosphorus (P), and elemental sulfur (S). The sulfide solid electrolyte has at least one peak observed in the chemical shift range of 3.4 ppm to 4.8 ppm in a spectrum obtained by ¹H-NMR measurement. It is preferable that the sulfide solid electrolyte has an argyrodite-type crystal structure. It is also preferable that the sulfide solid electrolyte contains an ester compound of a carboxylic acid and an alcohol.

## Description

### Technical Field

The present invention relates to a sulfide solid electrolyte. The sulfide solid electrolyte of the present invention is favorably used in a solid-state battery.

### Background Art

Recently, instead of electrolytic solutions used in many liquid-based batteries, solid electrolytes have garnered attention. It is hoped that solid-state batteries in which such solid electrolytes are used will be put to practical use as batteries that are safer than liquid-based batteries in which flammable organic solvents are used and that also have a high energy density.

Of all the solid electrolytes, a sulfide solid electrolyte has the advantage of being highly conductive to lithium ions. For example, Patent Literature 1 discloses a method for producing a sulfide solid electrolyte by pulverizing a raw material containing lithium sulfide and phosphorus sulfide in a primary liquid containing an organic solvent. According to this method, a polar solvent serving as a dispersant is added to the primary liquid in the middle of pulverization. When a sulfide solid electrolyte has been produced, the primary liquid and the polar solvent are removed, and the solid electrolyte is used to produce a battery.

### Citation List

### Patent Literature

Patent Literature 1: JP 2017-188352A

### Summary of Invention

The technology disclosed in Patent Literature 1 above was made in an attempt to improve the solid electrolyte production efficiency by not using a dispersant in a separate process after a coarse solid electrolyte has been synthesized. Incidentally, for solid-state batteries, although improvement in the solid electrolyte production efficiency is certainly important, improvement in the cycle characteristics of the solid-state batteries is also a significant issue. Note that Patent Literature 1 makes no mention regarding the cycle characteristics of a solid-state battery. Therefore, an object of the present invention is to provide a sulfide solid electrolyte that is favorably used in a solid-state battery with improved cycle characteristics.

The present invention provides a sulfide solid electrolyte including elemental lithium (Li), elemental phosphorus (P), and elemental sulfur (S),
wherein the sulfide solid electrolyte has at least one peak observed in a chemical shift range of 3.4 ppm to 4.8 ppm in a spectrum obtained by ¹H-NMR measurement.

Also, the present invention provides a method for producing a sulfide solid electrolyte, the method including:
a step of wet-pulverizing a slurry containing a lithium-ion conductive sulfide, an organic solvent, and an ester compound, the lithium-ion conductive sulfide containing elemental lithium (Li), elemental phosphorus (P), and elemental sulfur (S),
wherein the ester compound is an ester compound of a carboxylic acid and an alcohol.

### Brief Description of Drawings

[Fig. 1] Fig. 1 shows a ¹H-NMR spectrum of a sulfide solid electrolyte obtained in Example 1, and a second derivative curve thereof.
[Fig. 2] Fig. 2 shows a ¹H-NMR spectrum of a sulfide solid electrolyte obtained in Comparative Example 1, and a second derivative curve thereof.

### Description of Embodiments

Hereinafter, the present invention will be described on the basis of preferred embodiments thereof. A sulfide solid electrolyte (hereinafter also referred to simply as "solid electrolyte") of the present invention contains a material having lithium ion conductivity in a solid state. It is preferable that the sulfide solid electrolyte of the present invention has a sufficient level of lithium ion conductivity for the operation of a lithium battery, preferably at room temperature, that is, 25°C.

Here, the wording "having lithium ion conductivity" means that, for example, the sulfide solid electrolyte has such a level of lithium ion conductivity that allows a lithium battery to operate at room temperature. It is preferable that the sulfide solid electrolyte of the present invention has, at room temperature, that is, 25°C, a lithium ion conductivity of 2.0 mS/cm or more, more preferably 4.2 mS/cm or more, even more preferably 5.0 mS/cm or more, yet even more preferably 5.5 mS/cm or more, and yet even more preferably 6.0 mS/cm or more.

The above-described material having lithium ion conductivity contains elemental sulfur (S). That is to say, the material having lithium ion conductivity is a lithium-ion conductive sulfide. Examples of the lithium-ion conductive sulfide include compounds containing elemental lithium (Li), elemental phosphorus (P), and elemental sulfur (S). In particular, from the viewpoint of improving the ion conductivity, it is preferable to use a compound containing elemental lithium (Li), elemental phosphorus (P), elemental sulfur (S), and an elemental halogen. The lithium-ion conductive sulfide may also contain another element in addition to elemental lithium (Li), elemental phosphorus (P), elemental sulfur (S), and the elemental halogen. For example, a portion of elemental lithium (Li) may be replaced with at least one element selected from the group consisting of other elemental alkali metals and elemental alkaline earth metals, a portion of elemental phosphorus (P) may be replaced with another elemental pnictogen, and a portion of elemental sulfur (S) may be replaced with another Group 16 element.

Preferably, the solid electrolyte of the present invention containing the above-described lithium-ion conductive sulfide has at least one peak observed in the chemical shift range of 3.4 ppm to 4.8 ppm in a spectrum obtained by ¹H-NMR measurement. As a result of research conducted by the inventors of the present invention, it was found that a solid-state battery that is obtained using a solid electrolyte having a peak observed in this range in a spectrum obtained by ¹H-NMR measurement has improved cycle characteristics. The reason for this is currently not completely elucidated, but it is surmised that, in the solid electrolyte of the present invention, the structure of the lithium-ion conductive sulfide, which is a substance involved in the conduction of lithium ions, is stabilized, and the structure is thus unlikely to deteriorate even after repeated charge-discharge cycles. From the viewpoint of improving the charge-discharge cycle characteristics even more, the range in which at least one peak is observed, that is, the chemical shift range in the spectrum obtained by ¹H-NMR measurement is, for example, preferably 3.6 ppm or more, more preferably 3.7 ppm or more, and even more preferably 4.0 ppm or more. On the other hand, the above-described chemical shift range in the spectrum obtained by ¹H-NMR measurement is, for example, preferably 4.6 ppm or less, and more preferably 4.5 ppm or less.

In the present invention, the wording "has at least one peak observed" means that at least one peak top is observed in a predetermined range. Note that, in the case where there are a plurality of overlapping peaks, the wording above means that at least one peak top is observed in the predetermined range after peak separation. The peak separation method that may be used in the present invention will be described later, and a description thereof is not given here.

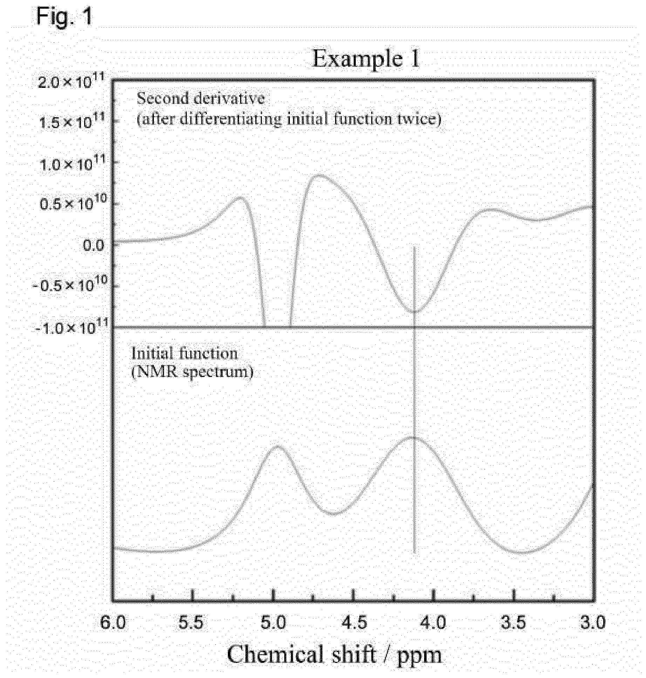

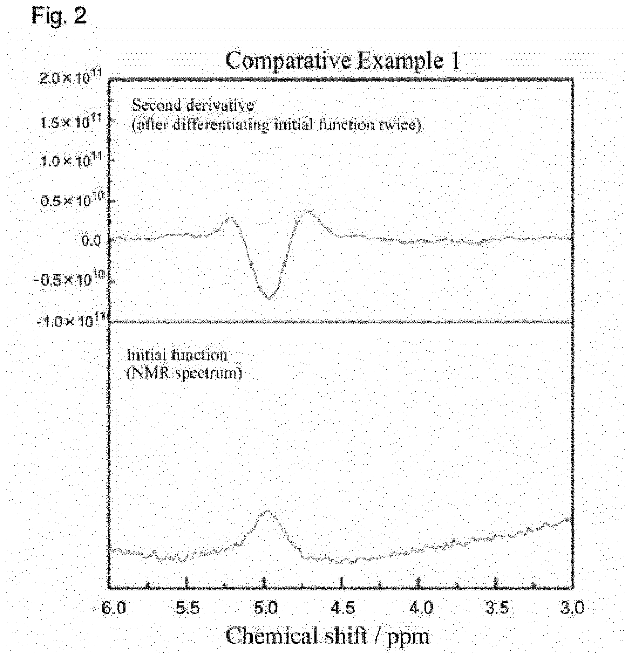

In the present invention, the term "peak top" encompasses not only a portion that is convex upward in an NMR spectrum but also a shoulder portion. For example, when an NMR spectrum is represented by an initial function y = f(x), where x is on the horizontal axis of the NMR spectrum and y is on the vertical axis, if a second derivative y = f"(x) obtained by differentiating the initial function twice has a local minimum, and furthermore, when the second derivative has a local minimum at x = a, the local minimum f"(a) satisfies f"(a) < -5.0 × 10⁹, then there is a peak top. In the present invention, whether or not there was a peak top was judged by differentiating an NMR spectrum twice using Origin 9.1 software (manufactured by Light Stone). For example, in Example 1, which will be described later, as shown in Fig. 1, regarding a peak observed in the range of 3.4 ppm to 4.8 ppm, it was confirmed that a second derivative obtained by differentiating the NMR spectrum twice had a local minimum of less than -5.0 × 10⁹. On the other hand, in Comparative Example 1, as shown in Fig. 2, the second derivative did not have such a local minimum of less than -5.0 × 10⁹. Note that a ¹H-NMR spectrum can be measured using a method that will be described later.

In the present invention, it is preferable that the full width at half maximum (FWHM) of the peak observed in the chemical shift range of 3.4 ppm to 4.8 ppm in the spectrum obtained by ¹H-NMR measurement is, for example, from 0.2 ppm to 1.0 ppm, more preferably from 0.3 ppm to 0.9 ppm, and even more preferably from 0.4 ppm to 0.8 ppm. When the FWHM of the peak is within the above-described range, an ester linkage site, which will be described later, is bound or adsorbed to the surface of the lithium-ion conductive sulfide, a layer of the ester compound is formed on the surface of the lithium-ion conductive sulfide, and the charge-discharge cycle characteristics are thus improved. Note that, in the case where a plurality of peaks are observed in the chemical shift range of 3.4 ppm to 4.8 ppm in the spectrum obtained by ¹H-NMR measurement, it is preferable that, after peak separation, the FWHM of at least one peak is within the above-described range. The method for calculating the FWHM will be described later, and a description thereof is not given here.

In order that the solid electrolyte of the present invention has a peak observed in a spectrum obtained by ¹H-NMR measurement, for example, it is preferable that at least one of the following conditions is satisfied: (a) the lithium-ion conductive sulfide, which is a component contained in the solid electrolyte, has a structure containing a hydrogen atom; and (b) the solid electrolyte contains a compound containing a hydrogen atom. Irrespective of which of the conditions (a) and (b) is satisfied, the effect of improving the charge-discharge cycle characteristics is realized by the solid electrolyte having a peak observed in the above-described range in a spectrum obtained by ¹H-NMR measurement. As a result of research conducted by the inventors of the present invention, it was found that the cycle characteristics are improved even more especially in the case where the condition (b) is satisfied.

In the case where the condition (b) is satisfied, that is, the solid electrolyte contains a compound containing a hydrogen atom, it is preferable that the compound has a structure which has an ester linkage (-C(=O)O-) and has a carbon atom located adjacent to the oxygen atom (-O-), and where at least one hydrogen atom is bound to the carbon atom. When the solid electrolyte of the present invention contains an ester compound having this structure, the ester linkage site of the ester compound is bound or adsorbed to the surface of the lithium-ion conductive sulfide, and a layer of the ester compound is formed on the surface of the lithium-ion conductive sulfide. Probably, the charge-discharge cycle characteristics are improved due to the formation of this layer. The inventors of the present invention consider that, in this case, the peak observed in the above-described range in the spectrum obtained by ¹H-NMR measurement is derived from the hydrogen atom that is bound to the carbon atom located adjacent to the oxygen atom (-O-) in the ester linkage (-C(=O)O-). Note that the solid electrolyte of the present invention may contain one ester compound alone or may contain two or more ester compounds.

It is particularly preferable that the ester compound is an ester compound of a carboxylic acid and an alcohol, because the charge-discharge cycle characteristics can be improved even more. Examples of the carboxylic acid constituting the ester compound include a saturated aliphatic monovalent carboxylic acid, an unsaturated aliphatic monovalent carboxylic acid, an aliphatic divalent carboxylic acid, an aromatic carboxylic acid, and an alicyclic carboxylic acid. In the present invention, it is preferable to use a saturated aliphatic monovalent carboxylic acid as the carboxylic acid, because the effects of the present invention can be more markedly realized. In addition, it is preferable that the carboxylic acid has, for example, 2 carbon atoms or more, and the number of carbon atoms may be 18 or less, preferably 10 or less, more preferably 8 or less, and even more preferably 6 or less.

Examples of the saturated aliphatic monovalent carboxylic acid include linear fatty acids such as formic acid (methanoic acid), acetic acid (ethanoic acid), propionic acid (propanoic acid), butyric acid (butanoic acid), valeric acid (pentanoic acid), caproic acid (hexanoic acid), enanthic acid (heptanoic acid), caprylic acid (octanoic acid), capric acid (decanoic acid), lauric acid (dodecanoic acid), myristic acid (tetradecanoic acid), palmitic acid (hexadecanoic acid), stearic acid (octadecanoic acid), arachidic acid, cerotic acid, and lacceric acid. Other examples of the saturated aliphatic monovalent carboxylic acid include branched fatty acids such as isobutyric acid, 2-methylpentanoic acid, pivalic acid (2,2-dimethylpropanoic acid), 2,2-dimethylbutanoic acid, 2-methylhexanoic acid, 5-methylhexanoic acid, 2,2-dimethylheptanoic acid, 2-ethyl-2-methylbutanoic acid, 2-ethylhexanoic acid, dimethylhexanoic acid, 2-n-propyl-pentanoic acid, 3,5,5-trimethylhexanoic acid, dimethyloctanoic acid, isotridecanoic acid, isomyristic acid, isostearic acid, isoarachidic acid, and isohexanoic acid.

The alcohol constituting the ester compound may be, for example, a monohydric alcohol or a dihydric or higher polyhydric alcohol. Examples of the monohydric alcohol include methanol, ethanol, 1-propanol, 2-propanol, butanol, pentanol, neopentyl glycol, hexanol, benzyl alcohol, allyl alcohol, and cyclohexanol. On the other hand, examples of the polyhydric alcohol include ethylene glycol, propanediol, butanediol, glycerol, and trimethylpropane.

In the present invention, from the viewpoint of improving the cycle characteristics even more, it is preferable that the ester compound is an ester compound represented by the structural formula (1) below. One ester compound represented by the structural formula (1) may be used alone, or two or more ester compounds represented by the structural formula (1) may be used in combination.

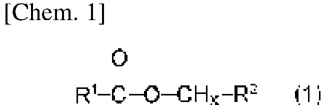

In the formula (1) above, x represents an integer of 0 to 2. R¹ represents a hydrogen atom or a linear or branched alkyl group having 1 to 4 carbon atoms. R² each independently represent a hydrogen atom or a linear or branched alkyl group having 1 to 7 carbon atoms. However, when x is 0, at least one of R² is a hydrogen atom.

In a compound represented by the formula (1), the group represented by R¹ may be, for example, a methyl group, an ethyl group, a n-propyl group, an isopropyl group, a n-butyl group, a sec-butyl group, a tert-butyl group, an isobutyl group, or the like. Of these groups, an alkyl group having 1 to 3 carbon atoms, especially having 1 to 2 carbon atoms, is preferably used from the viewpoint of improving the charge-discharge cycle characteristics even more.

On the other hand, in a compound represented by the formula (1), R² each may be a methyl group, an ethyl group, a n-propyl group, an isopropyl group, a n-butyl group, a sec-butyl group, a tert-butyl group, an isobutyl group, a n-pentyl group, a sec-pentyl group, a tert-pentyl group, an isopentyl group, a neopentyl group, a n-hexyl group, a sec-hexyl group, a tert-hexyl group, an isohexyl group, a neohexyl group, a n-heptyl group, a sec-heptyl group, a tert-heptyl group, an isoheptyl group, a neoheptyl group, a n-octyl group, a sec-octyl group, a tert-octyl group, an isooctyl group, a neooctyl group, or the like. Of these groups, an alkyl group having 1 to 5 carbon atoms, especially having 1 to 3 carbon atoms, is preferably used from the viewpoint of improving the charge-discharge cycle characteristics even more.

Examples of such an ester compound include, but are not limited to, methyl formate, ethyl formate, propyl formate, butyl formate, pentyl formate, hexyl formate, heptyl formate, octyl formate, methyl acetate, ethyl acetate, propyl acetate, butyl acetate, pentyl acetate, hexyl acetate, heptyl acetate, octyl acetate, methyl propionate, ethyl propionate, propyl propionate, butyl propionate, pentyl propionate, hexyl propionate, heptyl propionate, octyl propionate, methyl butyrate, ethyl butyrate, propyl butyrate, butyl butyrate, pentyl butyrate, hexyl butyrate, heptyl butyrate, octyl butyrate, methyl valerate, ethyl valerate, propyl valerate, butyl valerate, pentyl valerate, hexyl valerate, heptyl valerate, octyl valerate, methyl pivalate, ethyl pivalate, propyl pivalate, butyl pivalate, pentyl pivalate, hexyl pivalate, heptyl pivalate, octyl pivalate, methyl isovalerate, ethyl isovalerate, propyl isovalerate, butyl isovalerate, pentyl isovalerate, hexyl isovalerate, heptyl isovalerate, octyl isovalerate, methyl hydroangelate, ethyl hydroangelate, propyl hydroangelate, butyl hydroangelate, pentyl hydroangelate, hexyl hydroangelate, heptyl hydroangelate, octyl hydroangelate, isopropyl formate, isopropyl acetate, isopropyl propionate, isopropyl butyrate, isobutyl formate, isobutyl acetate, isobutyl propionate, isobutyl butyrate, sec-butyl formate, sec-butyl acetate, sec-butyl propionate, sec-butyl butyrate, tert-butyl formate, tert-butyl acetate, tert-butyl propionate, and tert-butyl butyrate.

As a result of research conducted by the inventors of the present invention, it was found that, in the case where the solid electrolyte of the present invention contains the above-described ester compound and the lithium-ion conductive sulfide, the charge-discharge cycle characteristics can be improved even more by appropriately adjusting the amount of the ester compound contained in the solid electrolyte. In the present invention, the area of the peak observed in the above-described chemical shift range in the spectrum obtained by ¹H-NMR measurement is obtained, and the ester compound is quantified based on the thus obtained peak area. The quantification method will be described later.

It is preferable that the peak area observed in the range of 3.4 ppm to 4.8 ppm in the spectrum obtained by ¹H-NMR measurement of the sulfide solid electrolyte of the present invention is, for example, 1.0 × 10⁸ or more, more preferably 5.0 × 10⁸ or more, and even more preferably 1.0 × 10⁹ or more. On the other hand, the above-described peak area in the spectrum of the sulfide solid electrolyte of the present invention is preferably 1.0 × 10¹¹ or less, more preferably 5.0 × 10¹⁰ or less, and even more preferably 2.0 × 10¹⁰ or less.

By setting the above-described area within the above-described range, it is possible to adjust the amount of the ester compound contained in the sulfide solid electrolyte such that the amount is within a predetermined range, and accordingly, the charge-discharge cycle characteristics of a battery can be improved even more. Moreover, it is possible to suppress an increase in the interface resistance of portions of contact between powder particles caused by an excessively large amount of ester compound contained in the sulfide solid electrolyte.

Also, it is preferable that, in a spectrum obtained by ¹H-NMR measurement of an electrode mixture containing the sulfide solid electrolyte of the present invention and an active material, the peak area observed in the chemical shift range of 3.4 ppm to 4.8 ppm is, for example, 5.0 × 10⁶ or more, more preferably 2.5 × 10⁷ or more, and even more preferably 5.0 × 10⁷ or more. On the other hand, the above-described peak area in the spectrum of the electrode mixture containing the sulfide solid electrolyte of the present invention and the active material is preferably 5.0 × 10⁹ or less, more preferably 2.5 × 10⁹ or less, and even more preferably 1.0 × 10⁹ or less.

By setting the peak areas observed in the chemical shift range of 3.4 ppm to 4.8 ppm in the respective spectra obtained by ¹H-NMR measurement of the sulfide solid electrolyte of the present invention and the electrode mixture using the sulfide solid electrolyte within the above-described ranges, it is possible to improve the cycle characteristics even more. Note that, in the case where a plurality of peaks are observed in the range of 3.4 ppm to 4.8 ppm through ¹H-NMR spectrum measurement, it is preferable that the sum total of the areas of the plurality of peaks after peak separation is within the above-described range.

The procedure for finding the peak area observed in the chemical shift range of 3.4 ppm to 4.8 ppm in each of the spectra obtained by ¹H-NMR measurement of the sulfide solid electrolyte of the present invention, and the electrode mixture containing the sulfide solid electrolyte and an active material, will be described later, and a description thereof is not given here.

Note that, depending on the type of the ester compound contained in the solid electrolyte, two or more peaks may be observed in the range of 3.4 ppm to 4.8 ppm, and in that case, the peak area I means the sum total of the areas of those peaks observed in that range.

The solid electrolyte of the present invention contains an ester compound and an organic solvent. The total amount of the ester compound and the organic solvent contained in the solid electrolyte of the present invention is, for example, preferably 1.5 mass% or less, more preferably 1.3 mass% or less, and even more preferably 1.0 mass% or less. On the other hand, the total amount of the ester compound and the organic solvent contained in the solid electrolyte of the present invention is, for example, preferably 0.1 mass% or more, more preferably 0.2 mass% or more, and even more preferably 0.3 mass% or more. By setting the total amount of the ester compound and the organic solvent contained in the solid electrolyte of the present invention within the above-described range, it is possible to even more markedly realize the effects of the present invention and to suppress an increase in the resistance.

The mass ratio of the amount of the ester compound contained in the solid electrolyte of the present invention to the total amount of the ester compound and the organic solvent contained therein is, for example, preferably 0.05 or more, more preferably 0.10 or more, and even more preferably 0.15 or more. On the other hand, the above-described mass ratio is, for example, preferably 0.70 or less, more preferably 0.60 or less, and even more preferably 0.50 or less. By setting the mass ratio of the amount of the ester compound contained in the solid electrolyte of the present invention to the total amount of the ester compound and the organic solvent contained therein within the above-described range, it is possible to even more markedly realize the effects of the present invention.

In the case where the solid electrolyte of the present invention contains the ester compound and the lithium-ion conductive sulfide, the solid electrolyte can be prepared using various methods. For example, a solid electrolyte can be obtained by synthesizing a lithium-ion conductive sulfide using a known method and mixing the lithium-ion conductive sulfide with the above-described ester compound using a predetermined method prior to producing a solid-state battery using the lithium-ion conductive sulfide. According to another method, a solid electrolyte can be obtained by synthesizing a lithium-ion conductive sulfide using a known method, and adding the above-described ester compound to the lithium-ion conductive sulfide when adjusting the particle size of the lithium-ion conductive sulfide through pulverization, thereby mixing the ester compound into a pulverized product. Preferably, the pulverization is performed using a wet method that employs an organic solvent. The reason for this is that the pulverization target and water can be prevented from coming into contact with each other, and consequently, chemical deterioration of the solid electrolyte can be suppressed.

To perform wet pulverization, first, a slurry containing the lithium-ion conductive sulfide and the organic solvent is prepared, and the slurry is subjected to wet pulverization. The ester compound is contained in the slurry in advance. Thus, wet pulverization of the lithium-ion conductive sulfide and mixing of the lithium-ion conductive sulfide with the ester compound can be advantageously performed at the same time. Furthermore, the ester compound can also be expected to function as a dispersant during the wet pulverization of the lithium-ion conductive sulfide, and thus, a pulverized product with less aggregation can be advantageously obtained.

The feed amount of the ester compound to be contained in the slurry used for wet pulverization is preferably from 0.1 to 15.0 mass%, more preferably from 0.3 to 10.0 mass%, and even more preferably from 1.0 to 5.0 mass%, with respect to 100 mass% of the lithium-ion conductive sulfide. By adding the ester compound in an amount within this range, it is possible to add a necessary and sufficient amount of the ester compound to the pulverized lithium-ion conductive sulfide.

It is preferable to use at least one of an aromatic hydrocarbon and an aliphatic hydrocarbon as the organic solvent used for wet pulverization, because the wet pulverization can be successfully performed, and the ester compound can be reliably attached to the pulverized lithium-ion conductive sulfide. From the viewpoint of even more markedly realizing these effects, it is preferable to use a benzene derivative, such as benzene, toluene, xylene, or alkyl benzene, as the aromatic hydrocarbon. It is preferable to use an alkane having preferably 5 to 12, or more preferably 6 to 11, carbon atoms as the aliphatic hydrocarbon.

There is no particular limitation on the type of the lithium-ion conductive sulfide contained in the solid electrolyte of the present invention. The lithium-ion conductive sulfide may or may not have an argyrodite-type crystal structure, for example. In the present invention, from the viewpoint of improving the charge-discharge cycle characteristics even more, it is preferable that the lithium-ion conductive sulfide is made of a compound that has an argyrodite-type crystal structure. Here, the "argyrodite-type crystal structure" refers to a crystal structure possessed by a group of compounds derived from a mineral represented by the chemical formula Ag₈GeS₆. From the viewpoint of improving the ion conductivity, it is particularly preferable that the lithium-ion conductive sulfide having an argyrodite-type crystal structure has a crystal structure belonging to that of cubic crystals.

In the lithium-ion conductive sulfide having an argyrodite-type crystal structure, one or two or more elements of elemental fluorine (F), elemental chlorine (Cl), elemental bromine (Br), and elemental iodine (I), for example, can be used as the elemental halogen (X) contained in the lithium-ion conductive sulfide. From the viewpoint of improving the ion conductivity, it is particularly preferable to use a combination of elemental chlorine (Cl) and elemental bromine (Br) as the elemental halogen.

From the viewpoint of improving the ion conductivity even more, it is particularly preferable that the lithium-ion conductive sulfide having an argyrodite-type crystal structure is a compound represented by, for example, a compositional formula: Li_{7-a-2b}PS_{6-a-b}Xₐ, where X represents at least one of elemental fluorine (F), elemental chlorine (CI), elemental bromine (Br), and elemental iodine (I).

In the above-described compositional formula, a represents the molar ratio of the elemental halogen (X) and is preferably from 0.4 to 2.2. If a is within this range, the cubic argyrodite-type crystal structure is stable at temperatures near room temperature (25°C), and the lithium ion conductivity can be increased. From this point of view, a is more preferably from 0.5 to 2.0, even more preferably from 0.6 to 1.8, and yet more preferably from 0.7 to 1.6.

In the above-described compositional formula, b represents a value indicating how much smaller the amount of the Li2S component is than that in the stoichiometric composition. It is preferable that the value of b satisfies -0.9 ≤b ≤ -a+2, because this makes the cubic argyrodite-type crystal structure stable at temperatures near room temperature (25°C) and increases the lithium ion conductivity. In particular, from the viewpoint of improving the moisture resistance of the cubic argyrodite-type crystal structure, it is more preferable that b satisfies -a+0.4 ≤b, and it is even more preferable that b satisfies -a+0.9 ≤b.

Whether or not a lithium-ion conductive sulfide has an argyrodite-type crystal structure can be confirmed by performing XRD measurement, for example. That is to say, in an X-ray diffraction pattern measured with an X-ray diffractometer (XRD) using CuKα1 radiation, a crystal phase having an argyrodite-type structure has characteristic peaks at 2θ = 15.34° ± 1.00°, 17.74° ± 1.00°, 25.19° ± 1.00°, 29.62° ± 1.00°, 30.97° ± 1.00°, 44.37° ± 1.00°, 47.22° ± 1.00°, and 51.70° ± 1.00°. Furthermore, a crystal phase having an argyrodite-type structure also has characteristic peaks at, for example, 2θ = 54.26° ± 1.00°, 58.35° ± 1.00°, 60.72° ± 1.00°, 61.50° ± 1.00°, 70.46° ± 1.00°, and 72.61° ± 1.00°. On the other hand, if a lithium-ion conductive sulfide does not contain a crystal phase having an argyrodite-type structure, this can be confirmed by checking that the sulfide solid electrolyte does not have the above-described peaks characteristic of a crystal phase having an argyrodite-type structure.

A lithium-ion conductive sulfide having an argyrodite-type crystal structure means that the lithium-ion conductive sulfide has at least a crystal phase with an argyrodite-type structure. In the present invention, it is preferable that the lithium-ion conductive sulfide has a crystal phase having an argyrodite-type structure as the main phase. In this case, the term "main phase" refers to a phase that occupies the largest proportion of the total amount of all of the crystal phases constituting the lithium-ion conductive sulfide. Accordingly, the proportion of a crystal phase having an argyrodite-type structure contained in the lithium-ion conductive sulfide to all of the crystal phases constituting the lithium-ion conductive sulfide is, for example, preferably 60 mass% or more, or more preferably 70 mass% or more, 80 mass% or more, or 90 mass% or more. Note that the proportion of a crystal phase can be confirmed through XRD, for example.

The solid electrolyte of the present invention can be used as a material that constitutes a solid electrolyte layer, or as a material that is contained in an electrode mixture containing an active material, for example. Specifically, the sulfide solid electrolyte can be used in a positive electrode mixture that contains a positive electrode active material and constitutes a positive electrode layer, or in a negative electrode mixture that contains a negative electrode active material and constitutes a negative electrode layer. Therefore, the solid electrolyte of the present invention can be used in a battery having a solid electrolyte layer, or a so-called solid-state battery. More specifically, the solid electrolyte can be used in a lithium solid-state battery. The lithium solid-state battery may be a primary battery or a secondary battery, but particularly preferably, the solid electrolyte is used in a lithium secondary battery. The term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

A solid-state battery of the present invention has a positive electrode layer, a negative electrode layer, and a solid electrolyte layer between the positive electrode layer and the negative electrode layer, and it is preferable that the solid electrolyte layer contains the solid electrolyte of the present invention. Regarding the shape of the solid-state battery, for example, laminate-type, cylindrical, and rectangular batteries can be used.

The solid electrolyte layer of the solid-state battery can be produced using, for example, a method in which a slurry containing the solid electrolyte of the present invention, a binder, and a solvent is dripped onto a substrate and leveled off with a doctor blade or the like; a method in which the substrate and the slurry are brought into contact with each other, followed by cutting with an air knife; a method in which a coating is formed through screen printing or the like, and then the solvent is removed through heat drying; or other methods. Alternatively, the solid electrolyte layer can also be produced by pressing a powder of the solid electrolyte of the present invention and then performing appropriate processing. The solid electrolyte layer may also contain another solid electrolyte, in addition to the solid electrolyte of the present invention. Typically, the thickness of the solid electrolyte layer of the present invention is preferably from 5 to 300 m, and more preferably from 10 to 100 m.

The positive electrode mixture of the solid-state battery containing the solid electrolyte of the present invention contains a positive electrode active material. As the positive electrode active material, for example, materials that are used as positive electrode active materials for lithium secondary batteries can be used as appropriate. Examples of the positive electrode active material include a spinel-type lithium transition metal compound, a lithium metal oxide having a layered structure, and the like. The positive electrode mixture may also contain other materials, including a conductive assistant, in addition to the positive electrode active material.

The negative electrode mixture of the solid-state battery containing the solid electrolyte of the present invention contains a negative electrode active material. As the negative electrode active material, for example, negative electrode mixtures that are used as negative electrode active materials for lithium secondary batteries can be used as appropriate. Examples of the negative electrode active material include lithium metals, carbon materials such as artificial graphite, natural graphite, and non-graphitizable carbon (hard carbon), silicon, silicon compounds, tin, tin compounds, and the like. The negative electrode mixture may also contain other materials, including a conductive assistant, in addition to the negative electrode active material.

### Examples

Hereinafter, the present invention will be described in greater detail by means of examples. However, the scope of the present invention is not limited to the examples below. In the following description, "%" means "mass%" unless otherwise specified.

### Example 1

A Li₂S powder, a P₂S₅ powder, a LiCl powder, and LiBr powder were weighed so that the composition Li_{5.4}PS_{4.4}Cl_{0.8}Br_{0.8} was realized. These powders were pulverized and mixed using a ball mill to obtain a powder mixture. The powder mixture was fired to obtain a fired product made of a lithium-ion conductive sulfide. The firing was performed using a tubular electric furnace. During the firing, 100% pure hydrogen sulfide gas was circulated in the electric furnace at 1.0 L/min. The firing temperature was set to 500°C, and the firing was performed for 4 hours. The results of XRD measurement confirmed that the fired product had an argyrodite-type crystal structure.

The fired product was coarsely disintegrated using a mortar and a pestle, and then disintegrated using a hammer crusher. The disintegrated product was mixed with a solvent to form a slurry. This slurry was fed into a bead mill apparatus (with zirconia beads having a diameter of 0.3 mm) and wet-pulverized. Toluene was used as the solvent of the slurry. Butyl acetate was added to the slurry. The amount of butyl acetate added was 3 mass% with respect to 100 parts by mass of the lithium-ion conductive sulfide. The concentration of the lithium-ion conductive sulfide was set to 15 mass%. After the wet pulverization, the slurry was subjected to solid-liquid separation, and the solid was dried. The dried fired product was passed through a sieve with an aperture size of 75 m to obtain an intended solid electrolyte.

### Example 2

Instead of butyl acetate, ethyl pivalate was added to the slurry used for wet pulverization in Example 1. Otherwise, a similar procedure to that of Example 1 was performed, and a solid electrolyte was thus obtained.

### Example 3

Instead of toluene, heptane was used as the solvent of the slurry used for wet pulverization in Example 1. Otherwise, a similar procedure to that of Example 1 was performed, and a solid electrolyte was thus obtained.

### Example 4

Instead of toluene, decane was used as the solvent of the slurry used for wet pulverization in Example 1. Otherwise, a similar procedure to that of Example 1 was performed, and a solid electrolyte was thus obtained.

### Example 5

A solid electrolyte was obtained by performing a similar procedure to that of Example 1, except that the Li2S powder, the P₂S₅ powder, and the LiCl powder were weighed so that the composition Li_{5.8}PS_{4.8}Cl_{1.2} was realized.

### Comparative Example 1

Butyl acetate was not added to the slurry used for wet pulverization in Example 1. Otherwise, a similar procedure to that of Example 1 was performed, and a solid electrolyte was thus obtained.

### Comparative Example 2

Dry pulverization was performed instead of wet pulverization in Example 1. In addition, butyl acetate was not added. The dry pulverization was performed under the following conditions: Dry Burst Mini DB-100S manufactured by Sugino Machine Limited was used, and the rotation speed was set to 20,000 rev/min. Otherwise, a similar procedure to that of Example 1 was performed, and a solid electrolyte was thus obtained.

### Comparative Example 3

A solid electrolyte was obtained by performing a similar procedure to that of Comparative Example 1, except that the Li2S powder, the P₂S₅ powder, and the LiCl powder were weighed so that the composition Li_{5.8}PS_{4.8}Cl_{1.2} was realized.

### Evaluation

For each of the solid electrolytes obtained in the examples and the comparative examples, a spectrum was obtained by ¹H-NMR measurement using a method that will be described below, and the peak area and the FWHM of a peak observed in the chemical shift range of 3.4 ppm to 4.8 ppm were obtained. Table 1 shows the results. Note that, in the examples, only one peak was observed in the range of 3.4 ppm to 4.8 ppm.

### ¹H-NMR Measurement

About 3 to 4 mg of each of the solid electrolytes obtained in the examples and the comparative examples was filled into a zirconia sample tube with a diameter of 1.3 mm using a specified line of a rotor packer for reference, and a spectrum was obtained by performing solid-state ¹H-NMR measurement using an apparatus below under the following measurement conditions. A single pulse method was used for the measurement, adamantane was measured as a reference substance for determining the chemical shift, and the chemical shift position with the highest intensity in the obtained spectrum was determined as 1.91 ppm.
Apparatus: Avance NEO 600 (manufactured by Bruker)
Nuclide: ¹H
Static magnetic field strength, T: 14.1
¹H resonance frequency, MHz: 600.13
Pulse width P1, sec: 2.0
Pulse intensity PLW1, W: 20
Observation time Acquisiton Time, sec: 0.042
MAS rotation speed, kHz: 60.0
Observation sweep width SW, ppm: 80.9
Observation offset O1, ppm: 2.0
Number of times of integration NS, times: 150
Relaxation time D1, sec: 5.0
Receiver gain RG: 101
Measurement temperature, °C: 25

Note that whether the ¹H-NMR measurement has been properly performed under the above-described measurement conditions can be judged whether the area of a peak observed in the chemical shift range of -10.0 ppm to 10.0 ppm in the spectrum obtained when measuring adamantane as the reference substance is within the range of 1.2 × 10¹¹ to 1.5 × 10¹¹. At this time, the measurement was performed under the same measurement conditions as those described above, except that the number of times of integration (NS) was 4.

### Peak Analysis by Peak Fitting of ¹H-NMR Spectrum

With respect to a peak that appeared in the chemical shift range of 20 ppm to -20 ppm in an obtained solid-state ¹H NMR spectrum, separated peaks were determined using a peak fitting program "sola" included in "TopSpin 4.0.3" software, and the peak area and the FWHM were obtained. "Gauss/Lorentz" was used as a model for the peaks.

When "Best overlap", which indicates the degree of fitting to the NMR spectrum, reached 97% or more, and the number of separated peaks was the smallest, the separation was completed. Fitting parameters included the peak position (σᵢₛₒ, ppm), the peak height (ly, arbitrary unit), the peak FWHM (LB, Hz), and the Gauss/Lorentz ratio (xG/(1-x)L), and initial values that seemed to be appropriate were input to the various parameters to start fitting.

Although it is preferable that the number of separated peaks is as small as possible, when the peak shape has a shoulder portion or a tail portion, a separated peak is set. Furthermore, for a peak observed in the chemical shift range of 3.4 ppm to 4.8 ppm, a separated peak is set. Whether there is a peak can be judged in the following manner: when an NMR spectrum is represented by an initial function y = f(x), where x is on the horizontal axis of the NMR spectrum and y is on the vertical axis, if a second derivative y = f"(x) obtained by differentiating the initial function twice has a local minimum, and furthermore, when the second derivative has a local minimum at x = a, the local minimum f"(a) satisfies f"(a) < -5.0 × 10⁹, then there is a peak.

Fitting was repeated until "Best overlap" reached 97% or more while correcting the parameters, and if "Best overlap" did not reach 97% or more, the number of peaks was increased, and the analysis was then performed in a similar manner. If the Gauss/Lorentz ratio became less than 0, or greater than 1, during fitting, the Gauss/Lorentz ratio was set to 0.1 in each case, and the fitting was then restarted.

Moreover, solid-state batteries were produced using the respective solid electrolytes obtained in the examples and the comparative examples. More specifically, a LiNi_{0.5}Co_{0.2}Mn_{0.3}O₂ (NCM) powder (D₅₀ = 6 m), which is a ternary layered compound, was used as a positive electrode active material, a graphite (Gr) powder (D₅₀ = 20 m) was used as a negative electrode active material, and each of the solid electrolyte powders obtained in the examples and the comparative examples was used.

A positive electrode mixture powder was prepared by mixing the positive electrode active material powder, the solid electrolyte powder, and a conductivity aid (acetylene black) in a mass ratio of 60:37:3 in a mortar and molded by uniaxial pressing at 20 MPa, to thereby obtain a positive electrode mixture pellet.

A negative electrode mixture powder was prepared by mixing the graphite powder and the solid electrolyte powder in a mass ratio of 64:36 in a mortar.

A polypropylene cylinder that was open at upper and lower ends thereof (with an opening diameter of 10.5 mm and a height of 18 mm) was provided, the lower opening of the cylinder was closed with a positive electrode (made of SUS), and the positive electrode mixture pellet was put on the positive electrode. The powder solid electrolyte was put on the positive electrode mixture pellet, and uniaxial pressing was performed at 180 MPa to form a positive electrode mixture and a solid electrolyte layer. Subsequently, the negative electrode mixture powder was put on the solid electrolyte layer. Then, the cylinder was closed with a negative electrode (made of SUS), and uniaxial molding at 550 MPa was performed. Thus, a solid-state battery having a three-layer structure formed of the positive electrode mixture, the solid electrolyte layer, and a negative electrode mixture was produced.

The charge-discharge cycle characteristics of each of the thus obtained solid-state batteries were evaluated. More specifically, the battery was placed in an environmental tester in which the environmental temperature at which the battery was to be charged and discharged was set to 25°C, preparations for charging and discharging were made, and the battery was then allowed to stand until the battery temperature reached the environmental temperature. At the first time (the first cycle), constant current-constant potential charging up to 4.5 V at 0.1 C and subsequent constant current discharging down to 2.5 V at 0.1 C were performed, and an initial discharge capacity was obtained. In the second cycle and thereafter, a cycle of constant current-constant potential charging up to 4.5 V at 0.5 C and subsequent constant current discharging down to 2.5 V at 0.5 C was repeated 30 times. The ratio of the discharge capacity at the 30th cycle to the initial discharge capacity was obtained as the retention rate and used as the cycle characteristics. Note that the charge-discharge test was conducted with 1 mA being 1 C. Table 1 below shows the results.

**Table 1**

| | Lithium-ion conductive sulfide | Solvent (Pulverization step) | Dispersant | | Solid electrolyte | | | Battery characteristics |
|---|---|---|---|---|---|---|---|---|
| | | | | | NMR peak (3.4 to 4.8 ppm) | | | |
| | | | Type | Amount added / mass% | Peak top / ppm | FWHM / ppm | Peak area | Cycle characteristics (@30th cycle, 0.5 C) Capacity retention rate / % |
| Ex. 1 | Li_{5.4}PS_{4.4}Cl_{0.8}Br_{0.8} | Toluene | Butyl acetate | 3 | 4.13 | 0.64 | 4.2 × 10⁹ | 82 |
| Ex. 2 | | Toluene | Butyl pivalate | 3 | 4.41 | 0.46 | 4.9 × 10⁹ | 81 |
| Ex. 3 | | Heptane | Butyl acetate | 3 | 4.14 | 0.66 | 1.9 × 10⁹ | 80 |
| Ex. 4 | | Decane | Butyl acetate | 3 | 4.06 | 0.76 | 4.0 × 10⁹ | 83 |
| Ex. 5 | Li_{5.8}PS_{4.8}Cl_{1.2} | Toluene | Butyl acetate | 3 | 4.03 | 0.51 | 2.8 × 10⁹ | 78 |
| Com. Ex. 1 | Li_{5.4}PS_{4.4}Cl_{0.8}Br_{0.8} | Toluene | None | 0 | - | - | - | 76 |
| Com. Ex. 2 | | None | None | 0 | - | - | - | 71 |
| Com. Ex. 3 | Li_{5.8}PS_{4.8}Cl_{1.2} | Toluene | None | 0 | - | - | - | 70 |

| | | | | | | | | |
|---|---|---|---|---|---|---|---|---|
| (^{∗}) In the table, "-" means that no peak was observed in the chemical shift range of 3.4 to 4.8 ppm. | | | | | | | | |

As is clear from the results shown in Table 1, it was found that the solid-state batteries of the examples had superior charge-discharge cycle characteristics to the solid-state batteries of the comparative examples.

### Industrial Applicability

According to the present invention, it is possible to provide a sulfide solid electrolyte that can improve the cycle characteristics of a solid-state battery.

## Claims

1. A sulfide solid electrolyte comprising elemental lithium (Li), elemental phosphorus (P), and elemental sulfur (S),
wherein the sulfide solid electrolyte has at least one peak observed in a chemical shift range of 3.4 ppm to 4.8 ppm in a spectrum obtained by ¹H-NMR measurement.

2. The sulfide solid electrolyte according to claim 1, having an argyrodite-type crystal structure.

3. The sulfide solid electrolyte according to claim 1 or 2, comprising an ester compound of a carboxylic acid and an alcohol.

4. The sulfide solid electrolyte according to claim 3, wherein the ester compound is represented by the structural formula (1) below: 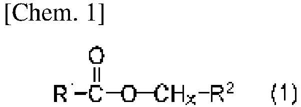 wherein x represents an integer of 0 to 2, R¹ represents a hydrogen atom or a linear or branched alkyl group having 1 to 4 carbon atoms, and R² each independently represent a hydrogen atom or a linear or branched alkyl group having 1 to 7 carbon atoms.

5. An electrode mixture comprising the sulfide solid electrolyte according to any one of claims 1 to 4 and an active material.

6. A solid electrolyte layer comprising the sulfide solid electrolyte according to any one of claims 1 to 4.

7. A solid-state battery comprising the sulfide solid electrolyte according to any one of claims 1 to 4.

8. A method for producing a sulfide solid electrolyte, the method comprising:
a step of wet-pulverizing a slurry containing a lithium-ion conductive sulfide, an organic solvent, and an ester compound, the lithium-ion conductive sulfide containing elemental lithium (Li), elemental phosphorus (P), and elemental sulfur (S),
wherein the ester compound is an ester compound of a carboxylic acid and an alcohol.

9. The method according to claim 8, wherein the organic solvent is at least one of an aromatic hydrocarbon and an aliphatic hydrocarbon.
